# EUROPÄISCHE PATENTSCHRIFT

(11) **EP 0 806 851 B1**
(45) Veröffentlichungstag und Bekanntmachung des Hinweises auf die Patenterteilung: **23.11.2005**
(21) Anmeldenummer: 97107438.0
(22) Anmeldetag: 06.05.1997
(51) Int. Cl.: H04H 1/00, H04B 1/20, H04B 7/12, H04B 7/08

(54) **Rundfunkempfangssystem für ein Fahrzeug, mit mehreren Empfangseinheiten, mit Erfassung der im Funkprogramm enthaltenen Zusatzdaten**
Broadcast receiver system for a car, comprising a plurality of receivers, with decoding of supplementary data contained in the broadcast programme
Récepteur pour émissions radiophoniques pour automobile, comportant une pluralité de récepteurs, avec décodage des données supplémentaires contenues dans l'émission

(30) Priorität: 09.05.1996 DE 9618755 U
(43) Veröffentlichungstag der Anmeldung: 12.11.1997
(73) Patentinhaber: BECKER GmbH, D-76307 Karlsbad (DE)
(72) Erfinder: Bischoff, Joachim, 75210 Keltern (DE)
(74) Vertreter: Westphal, Klaus

(56) Entgegenhaltungen:
- EP-A- 0 452 289
- EP-A- 0 588 423
- US-A- 5 159 707
- US-A- 5 345 602
- US-A- 5 351 274

## Beschreibung

Die vorliegende Erfindung betrifft ein Rundfunkempfangssystem, insbesondere ein RDS-Rundfunkempfangssystem mit einer Ein-/Ausgabeeinheit mit mehreren dieser zugeordneten Empfangseinheiten und ein Verfahren zum Empfangen von Rundfunksendungen mit Hilfe dieses Rundfunkempfangssystems.
Es sind Rundfunkempfänger als sogenannte Ein-Tuner-Geräte bekannt, welche in einem Gehäuse ein einziges Tunerteil, eine Steuereinheit, eine Signalaufbereitungseinheit und eine Ein-/Ausgabeeinheit aufweisen. Das über die Antenne empfangene und über die Antennenleitung dem Rundfunkempfänger zugeführte Antennensignal wird in dem Tunerteil demoduliert und nach der Qualität bewertet, in der Signalaufbereitungseinheit nach Klangeinstellparametern adaptiert und verstärkt und an die Ausgänge, insbesondere die Lautsprecher geleitet. Darüber hinaus können auch in dem Rundfunksignal empfangene Daten, wie die Programmidentifizierungskennzeichnung oder andere Daten zu den Signalen in dem Display der Ein-/Ausgabeeinheit dargestellt werden. Wird bei einem Ein-Tuner-Autobest-Rundfunkempfangsgerät das durch das eine Tunerteil empfangene Rundfunksignal schlechter als eine Grenzqualität, so wird durch die Steuereinheit versucht, eine alternative Frequenz desselben Senders einzustellen, welche ein besseres Signal aufweist. Während dieser Zeit wird die Signalaufbereitung durch die Signalaufbereitungseinheit unterbrochen, da für diese Zeit kein Rundfunkempfang auf einer definierten Frequenz mit ausreichender Qualität gegeben ist. Dies führt zu Unterbrechungen - sogenannte Mute-Pausen - im ausgegebenen Audiosignal. Diese Unterbrechungen sind um so störender, je häufiger der Versuch unternommen wird, ein besseres Signal zu finden und das Tunerteil auf diese Frequenz umzuschalten. Neben dem für den Hörer unangenehmen Unterbrechungen der Wiedergabe erweisen sich die Ein-Tuner-Geräte als recht groß, denn sie benötigen für den Einbau in einem Fahrzeug zumindest den 1-DIN-Schacht, um die notwendigen funktionellen Einheiten in der Nähe des Benutzers unterzubringen.

Weiterhin sind sogenannte Doppel- oder Mehrfach-Tuner-Geräte bekannt. Bei diesen bekannten Geräten werden zwei oder mehrere Tunerteile mit einer Steuereinheit, einer Signalaufbereitungseinheit in einem Gehäuse untergebracht, dem eine gemeinsame Antenne zugeordnet ist. Bei diesen Doppel- oder Mehrfach-Tuner-Geräten sind die einzelnen Tunerteile auf verschiedene Alternativfrequenzen ein- und desselben Senders eingestellt. Dabei wird das beste Tunersignal gesteuert von der Steuereinheit auf die Signalaufbereitungseinheit geleitet, welche die Audiosignalausgabe über die Ausgabeeinheit sicherstellt. Diese Geräte sind aufgrund des Zusammenwirkens der verschiedenen Tunerteile mit der einen gemeinsamen Antenne sehr aufwendig zu steuern, denn es ist stets festzustellen, welches Tunerteil zu einem bestimmten Zeitpunkt das beste Signal empfängt und somit an die Signalaufbereitungseinheit durchgeschaltet werden muß und welche von den anderen von dieser getrennt werden müssen. Da die verschiedenen Funktionseinheiten miteinander in Wechselwirkung stehen, erfordern sie einen enormen Organisationsaufwand, da die Probleme der Unterbringung aller Funktionseinheiten des Doppel- oder Mehrfach-Tuner-Empfängers in einem einzelnen Gehäuse zusätzlich erschwert. Somit wird der Vorteil dieser Geräte, ein durch das einfache Umschalten zweier identischer empfangener Rundfunksignale verschiedener Frequenzen erreichte mute-freie Umschalten sicherzustellen, durch eine Reihe von elektrischen, räumlichen und organisatorischen Nachteilen begleitet.

Weiterhin sind Rundfunkempfänger mit Antennen-Diversity-Anordnungen bekannt (siehe US-A-5 345 602). Solche Anordnungen zeigen eine Rundfunkempfänger mit mindestens einem Tunerteil und mehreren Antennen, von denen jeweils eine durch einen Umschalter auf den Antenneneingang des Rundfunkempfängers geschaltet werden kann. Derartige Rundfunkempfängern mit Antennen-Diversity-Anordnung haben beim Einsatz in Kraftfahrzeugen eine besondere Bedeutung erlangt, da die Auswahl der besten Antenne und damit des besten empfangenen Signals von der Orientierung und von der Position des Fahrzeugs abhängt. Bei diesem bekannten Antennen-Diversity-Anordnungen wird stets die Auswahl der Antenne nach der Qualität des Antennensignals auf der einen eingestellten Frequenz bestimmt. Diese Empfangssysteme zeigen eine befriedigende bis gute Empfangsqualität, solange eine Antenne auf der eingestellten Frequenz ein gutes bis sehr gutes Antennensignal liefert. Tritt jedoch der Fall auf, daß keine der Antennen auf der eingestellten Frequenz ein ausreichendes Signal liefert, muß entweder die eingestellte Frequenz mit dem schlechten Empfangssignal auf den Tuner und folglich auf die Ausgabeeinheit geleitet werde, was zu einem schlechten Wiedergabesignal führt, oder es muß der Empfang unterbrochen werden - Mute-Pausen - und in dieser Zeit eine alternative Frequenz ausgewählt und auf diese umgeschaltet werden. Somit wird deutlich, daß derartige Antennen-Diversity-Anordnungen nur begrenzt in der Lage sind, einen störungsfreien Empfang zu gewährleisten

Der Erfindung liegt daher die Aufgabe zugrunde, ein Rundfunkempfangssystem und ein Verfahren zum Betreiben eines derartigen Rundfunkempfangssystems anzugeben, das die vorgenannten Nachteile überwindet.

Diese Aufgabe wird durch das Rundfunkempfangssystem mit den Merkmalen des Anspruchs 1 und dem Verfahren zum Betreiben eines derartigen Rundfunkempfangssystems mit den Merkmalen gemäß den Ansprüchen 7 oder 8 gelöst.

Vorteilhafte Ausgestaltungen der Erfindung ergeben sich aus den Unteransprüchen.

Erfindungsgemäß wird das Rundfunkempfangssystem als dezentralisiertes System ausgebildet, das eine Ein-/Ausgabeeinheit aufweist und mehrere davon abgesetzte Empfangseinheiten. Jede der Empfangseinheiten zeigt eine Steuereinheit, ein Tunerteil und eine Signalaufbereitungseinheit mit digitaler Schnittstelle, sowie mindestens eine ihr zugeordnete Antenne. Die Empfangseinheiten sind mit der Ein-/Ausgabeeinheit über eine Verbindungsleitung für digitale Signale verbunden. Durch die Dezentralisierung gelingt es auf besonders vorteilhafte Weise, die einzelnen Einheiten an den für ihre Funktion geeigneten Positionen des Fahrzeugs anzuordnen, wo nicht wie im Bereich der Konsole des Fahrzeuges aufgrund der erforderlichen Bedienbarkeit für den Benutzer für die verschiedensten Geräte stets ein enormer Raummangel herrscht. Durch die Dezentralisierung gelingt es jetzt, nicht mehr dieses Augenmerk auf das Raumerfordernis richten zu müssen und dadurch optimierte Lösungen insbesondere im Hinblick auf Störeinstrahlfestigkeit, Temperaturstabilität oder gute stabile Frequenzgänge ausbilden zu können, was bisher zugunsten einer kleineren Bauform zurückstehen mußte. Damit wird die Anfälligkeit des Rundfunkempfangssystems gegen Ausfall oder Störungen aufgrund von externen Einflüssen oder Störungen externer Geräte durch das Rundfunkempfangssystem selbst deutlich reduziert.

Durch die Zuordnung eines Tunerteils zu jeder Empfangseinheit gelingt es, daß ein und dasselbe Rundfunkempfangssystem ohne zusätzlichen Hardwareaufwand allein durch entsprechende Steuerung sowohl als Frequenz-Diversity-System, als auch als Antennen-Diversity-System als auch als Kombination aus Antennen- und Frequenz-Diversity-System arbeiten kann. Beim Frequenz-Diversity-System arbeiten die Empfangseinheiten mit den zugeordneten Antennen auf verschiedenen Frequenzen desselben Senders, wobei diejenige Empfangseinheit den Vorzug erhält, welche das qualitativ beste Signal desselben Senders an die Ein-/Ausgabeeinheit geben kann. Im Antennen-Diversity-Betrieb arbeiten die Empfangseinheiten mit den zugeordneten Tunerteilen auf derselben Frequenz, wodurch die grundlegenden Unterschiede in der Orientierung und der Position der Antennen zum Tragen kommen und dadurch die für den Empfang geeignetste Antenne ausgewählt werden kann. Da es aber nicht nur auf die Auswahl der besten Frequenz, sprich des Tuners für sich allein oder die Antenne für sich allein ankommt, sondern auf die Kombination aus Tunerteil und Antenne, so erweist sich das erfindungsgemäße System als optimiertes Rundfunkempfangssystem sowohl für den Frequenz- als auch den Antennen-Diversity-Betrieb. Bei beiden Betriebsarten werden die wechselseitigen Einflüsse der Tunerteile und der Antennen bei der Beurteilung der Qualität des an die Ausgabeeinheit weitergegebenen Signals berücksichtigt, wodurch das wirklich beste Signal zur Wiedergabe kommt. Bei dem beschriebenen Rundfunkempfangssystem werden also alle wesentlichen Einflußfaktoren des Tunerteils und der Antennen zugleich berücksichtigt.

Dabei kommt es nicht darauf an, in welchem Empfangsmodus das Rundfunkempfangssystem betrieben wird, ob in dem ausschließlichen Frequenz-Diversity-Betrieb, dem ausschließlichen Antennen-Diversity-Betrieb oder in einer Betriebsform, die eine Mischung aus den beiden Betriebsformen darstellt, in dem ein Teil der Empfangseinheiten als Antennen-Diversity-Gruppe auf einer einzigen Frequenz eines Senders betrieben werden und eine oder mehrere andere Einheiten einschließlich der Antennen-Diversity-Gruppe auf verschiedenen Frequenzen ein und desselben Senders betrieben werden. Bei beiden sind die besonderen Vorteile aus Zusammenfassung der Tunerteile mit zugehöriger Antenne zu einer Empfangseinheit erkennbar.

Erfindungsgemäß sind die Empfangseinheiten und die Ein-/Ausgabeeinheit über eine Verbindungsleitung für digitale Signale miteinander verbunden. Über diese digitale Verbindungsleitung werden neben den Steuersignalen zwischen der Ein-/Ausgabeeinheit und den Empfangseinheiten, sowie unter den Empfangseinheiten, z.B. als Qualitätsinformationen zu den empfangenen oder übertragenen Signalen, ausgetauscht, auch die digitalisierten Audio- oder digitalen Zwischenfrequenzsignale übertragen. Durch die Verwendung derartiger Verbindungsleitungen für digitale Signale und das Übertragen der Signale zwischen den Komponenten in Form von digitalen Signalen läßt sich der Einfluß von Störungen auf der Übertragungsstrecke zwischen den Komponenten deutlich reduzieren, da durch verschiedene Korrekturmechanismen gegebenenfalls entstandene Übertragungsfehler behoben werden können. Als besonders vorteilhaft erweist sich, daß die Häufigkeit der Übertragungsfehler weitgehend unabhängig von der Länge der Übertragungsstrecke ist und damit die Reduzierung von Übertragungsfehler durch die Wahl der Übertragungsform direkt als auch durch die Möglichkeit mit Hilfe geeigneter Korrekturmechanismen nahezu unabhängig von der dezentraliesten Stuktur des Rundfunkempfangsystems besonders effizeint gegeben ist.

Jede Empfangseinheit erhält durch die eine oder durch verschiedene der zugeordneten Antennen ein Antennensignal, welches durch das jeweilige Tunerteil aufbereitet und nach seiner Qualität beurteilt wird. Das aufbereitete Signal wird zusammen mit dem Qualitätssignal digitalisiert und über die digitale Schnittstelle auf die Verbindungsleitung zur Übertragung an die jeweils anderen Empfangseinheiten oder an die Ein-/Ausgabeeinheit übertragen. Dabei wird die Steuerung jeder Empfangseinheit durch eine eigene Steuereinheit sichergestellt. Diese Steuereinheit sichert neben der Steuerung des Empfangs über das Tunerteil die Qualitätsbewertung und die Digitalisierung der aufgearbeiteten Daten, sowie die Abgabe der digitalisierten Daten an die Verbindungsleitung oder den Empfang bzw. die Durchreichung der von einer anderen Empfangseinheit erhaltenen digitalen Daten. Das Durchreichen wird stets dann der Fall sein, wenn die Qualitätsdaten der empfangenen Signale besser sind als die der in dem eigenen Tunerteil aufbereiteten Signale. In diesem Fall werden also die eigenen empfangenen Signale nicht an die Ein-/Ausgabeeinheit weitergereicht. Eine Überlastung des Empfangssystems durch unnötige Daten auf der Verbindungsleitung wird dadurch auf einfache und sichere Weise verhindert.

Durch das beschriebene Rundfunkempfangssystem ist bei optimierter Raumaufteilung ein sicheres Empfangen bei hoher Empfangsqualität gewährleistet, denn es wird ermöglicht, daß das Rundfunkempfangssystem sowohl die Vorteile des Frequenz-Diversity-Systems, als auch des Antennen-Diversity-Systems zugleich nutzen kann, wobei die jeweiligen Vorteile noch verstärkt werden, indem die wirklichen Qualitätsfaktoren zum Tragen kommen und nicht, wie beim Stand der Technik, nur die Qualitätsfaktoren allein einzelner Einflußgrößen davon.

Nach einer bevorzugten Ausführungsform der Erfindung werden die Empfangseinheiten und die diesen zugeordneten Antennen oder die zugeordnete Antenne in enger räumlicher Nähe zueinander angeordnet, d.h. daß die Empfangseinheiten bevorzugt im Bereich des Antennenfußes positioniert sind. Dadurch gelingt es, Störeinflüsse auf dem Weg zwischen der Antenne und der Empfangseinheit mit dem Tunerteil zu reduzieren und dadurch die Empfangsqualität wesentlich zu erhöhen. Dies ist um so bedeutsamer, wenn man berücksichtigt, daß die Antennensignale von sehr geringer Signalstärke sind und durch Störeinstrahlungen anderer Komponenten des Automobils, z.B durch die Zündung, sehr stark gestört werden können. Als bevorzugte Ausführungsform hat sich erwiesen, die Empfangseinheiten und die zugeordnete Antenne zu einer räumlich kompakten Einheit zu verbinden, d.h. bevorzugt die Empfangseinheit in den Antennenfuß zu integrieren. Dadurch lassen sich die Störeinstrahlungen auf dem Signalweg von der Antenne zur Empfangseinheit minimieren, was noch durch das gemeinsame Gehäuse um den Antennenfuß mit der Empfangseinheit verstärkt werden kann. Dieses Gehäuse wird vorzugsweise aus elektrisch leitendem Material ausgebildet, wodurch eine verstärkte und verbesserte elektromagnetische Abschirmung in der Art eines Faraday-Käfigs erreicht werden kann. Die über die Antenne und die Empfangseinheit aufbereiteten, digitalisierten Rundfunksignale werden dann, so wie sie sind, weitgehend störungsfrei über die Verbindungsleitungen direkt oder indirekt über andere Empfangseinheiten zu einer Ausgabeeinheit übertragen und dort über Verstärkereinheiten und Lautsprecher für den Benutzer hörbar gemacht. Dies führt zu einer optimierten, störungsarmen Wiedergabe des Rundfunksignals.

Nach einer anderen bevorzugten Ausführungsform der Erfindung werden die Empfangseinheiten und die Ein-/Ausgabeeinheit durch die Verbindungsleitung zu einem Ring verbunden. Dadurch läßt sich der organisatorische Aufwand für die Verwaltung und die Verteilung der digitalisierten Daten wesentlich reduzieren, da jede Komponente des Ringes bezogen auf die anderen Komponenten in einer einzigen unverzweigten Reihe angeordnet ist. Erhält die Ein-/Ausgabeeinheit ein digitales Rundfunksignal, so ist durch diese Anordnung gewährleistet, daß alle Empfangseinheiten dieses Rundfunksignal zuvor bereits erhalten haben und je nach Qualität des jeweils eigenen empfangenen Signals das auf dem Ring befindliche Signal weitergegeben oder das eigene in den Ring eingespeist haben. Auf diese Weise wird gewährleistet, daß stets das beste Empfangssignal zur Übertragung auf den Ring gegeben ist und schließlich bei der Ein-/Ausgabeeinheit zur Wiedergabe an den Benutzer ankommt.

Aufgrund der optimierten Organisationsform in Form eines Ringes lassen sich der Steuerungsaufwand und damit auch der Hardwareaufwand wesentlich reduzieren, was die Anfälligkeit und Störempfindlichkeit des gesamten Systems weiter reduziert. Zudem ermöglicht die durch den reduzierten Organisationsaufwand verkürzte, notwendige Zeit zum Einstellen des Systems auf neue Empfangsbedingungen ein wesentlich besseres Empfangsergebnis, insbesondere bei schnell und stark wechselnden Empfangsbedingungen wie bei Fahrten in Gebirgen.

Als vorteilhaft hat sich herausgestellt, die Verbindungsleitungen für die Übertragung von optischen Signalen auszubilden. Dies kann mittels Lichtwellenleitern erfolgen, die mit den Empfangseinheiten und der Ein-/Ausgabeeinheit verbunden sind und die von diesen die digitalen optischen Signale eingestrahlt bekommen und aus den Lichtwellenleitern entnehmen. Eine Übertragung der digitalen Signale über optische Lichtwellenleiter reduziert die Störanfälligkeit insbesondere von elektromagnetischen Störimpulsen, was wiederum der Qualität der Wiedergabe zugute kommt.

Nach einer bevorzugten Ausführungsform der Erfindung wird in der Ein-/Ausgabeeinheit eine Steuereinheit vorgesehen, welche die globale Steuerung des Rundfunkempfangssystems gewährleistet. Diese globale Steuerung bestimmt die übergeordnete Funktion der einzelnen Empfangseinheiten untereinander, d.h. welche Empfangseinheit dem Frequenz-Diversity-Modus oder dem Antennen-Diversity-Modus unterliegt. Die erforderlichen Steuerdaten werden dabei über die Verbindungsleitung ausgetauscht. Dabei können einzelne Empfangseinheiten selbst wiederum zu Gruppen zusammengefaßt werden, die über eine gruppenübergreifende Steuerung verfügen. Diese gruppenübergreifende Steuerung wird dennoch zentral von der globalen Steuerung in der Ein-/Ausgabeeinheit verwaltet. Durch diese hierarchische Struktur der Organisation ist ein sicheres, gesamtsystemrelevantes definiertes Verhalten des Rundfunkempfangssystem gewährleistet. Beispielsweise kann die zentrale übergeordnete Steuerung in der Ein-/Ausgabeeinheit erkennen, ob die Empfangseinheiten einen Defekt aufweisen und nicht mehr zur Verfügung stehen. Ist nur noch eine einzige Empfangseinheit in Betrieb, wird die zentrale übergeordnete Steuerung veranlassen, daß ein Notbetriebsmodus zum Tragen kommt, welcher die Funktion eines gewöhnlichen Ein-Tuner-Autobest-Rundfunkgerätes mit dieser einen einzigen verbleibenden Empfangseinheit realisiert.
Weiterhin kann diese zentrale übergeordnete Steuerung beim Hinzufügen einer weiteren Empfangseinheit ihre Empfangsstrategie spezifisch den neuen Gegebenheiten anpassen. Dies erfolgt indem die Empfangseinheiten regelmäßig oder oder zumindest beim Einschalten des Systems Ihre Position und Ihre Anzahl der Ein-/Ausgabeeinheit mitteilen, welche davon abhängig ihre Empfangsstrategien wählt. Damit kann automatisch ohne mechanischen oder elektrischen Eingriff in das System zur Identifizierung und zur Angabe der Position beim Hinzufügen einer neuen Empfangseinheit oder bei der Entfernung einer Empfangseinheit eine den Gegebenheiten angepaßte Steuerung des gesamten Empfangssystems mittels der hierarchische strukturierten Steuerungsorganisation gewährleistet werden. Damit lassen sich die verschieden Empfangsmoden reiner Antennen-Diversity-Betrieb, gegen reiner Frequenz-Diversity-Betrieb gegenüber einem gemischten Betrieb mit gegebenenfalls variierenden Anzahl an Teilnehmer eines Betriebsmodus in bevorzugter Weise entsprechend der jeweiligen Empfangssituation wählen ohne daß es eines spezifischen Eingriffs des Benutzers erfordert.
Nach einer anderen bevorzugten Ausführungsform sind die Empfangseinheiten mit ihren Steuereinheiten so ausgebildet, daß Sie die globale Steuerung der gesamten Empfangseinheiten, auch wenn sie in teilweise oder alle in eine oder mehrere Gruppen zusammengefaßt sind, je nach Anzahl, je nach Ort der Empfangseinheiten bzw. Ort der den Empfangseinheiten zugeordneten Antennen, je nach Eigenschaften der Tunerteile und ähnliche Einflußfaktoren auf die Empfangsqualität übernehmen oder übernehmen können. In dem Falle, daß die Empfangseinheiten die globale Steuerung übernommen haben oder inne haben, wird durch die Ein-/Ausgabeeinheit die Steuerfunktion für das Empfangssystem nur im stark eingeschränkten Umfang vorgenommen. Die Steuerung beschränkt sich im wesentlichen auf die Aufbereitung der der Ein-/Ausgabeeinheit über die Verbindungsleitung zugeführten digitalen Signale, das heißt zum Beispiel Steuerung der Klangaufbereitung oder Steuerung der Verstärkung und ähnliches sowie Steuerung des Man-Machine-Interfaces sowie der Festlegung und Mitteilung des gewählten Senders (z.B. SWF 3) anhand einer beispielhaften Empfangsfrequenz, einer Senderidentifikationskennzeichnung oder einer anderen Kennzeichnung des gewählten Senders an die Empfangseinheiten über die Verbindungsleitung. Bei einer derartigen Ausbildung der Erfindung können die Empfangseinheiten identisch insbesondere mit derselben Steuerung versehen sein, wodurch ein besonders flexibles Empfangssystem gebildet ist. Die Empfangseinheiten können in diesem Falle selbständig ohne Zwischenschaltung der Ein-/Ausgabeeinheit feststellen wie viele Empfangseinheiten zum Empfang bereit stehen und entsprechend dieser und ähnlicher Informationen die den aktuellen ggf. geänderten Bedingungen angepaßte Empfangsstrategie wählen. Insbesondere sind gemischte Empfangsstrategieen, Notfallstrategieen oder gruppenübergreifende Strategieen möglich und zeigen die zuvor genannten Vorteile. Die dezentrale Steuerung durch die Empfangseinheiten ermöglicht auch bei einem Ausfall der Ein-/Ausgabeeinheit dennoch den vollständigen Betrieb der Empfangseinheiten und die Wiedergabe über die Ein-/Ausgabeeinheit in einem entsprechend der Störung eingeschränkten Umfang. In diesem Fall kann jede der Empfangseinheiten alleine oder in Zusammenwirken mit einer oder mehrere der anderen Empfangseinheiten die globale Steuerung des Empfangssystems übernehmen. Dadurch wirkt sich ein Defekt einer Empfangseinheit nicht direkt empfangsverhindernd oder empfangsstörend aus.

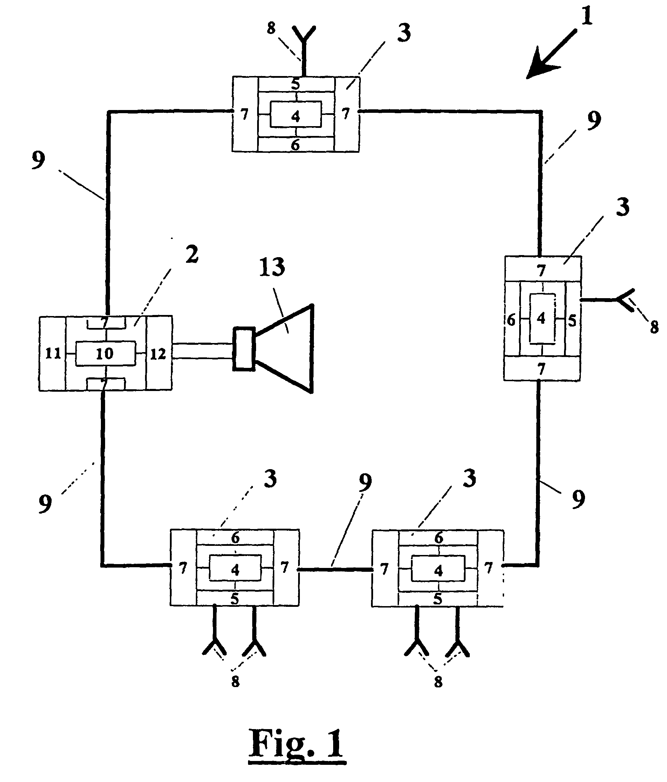

Vorzugsweise ist das Empfangssystem so ausgebildet, daß es bei der Verteilung der Aufgaben zwischen den Empfangseinheiten neben den aktuellen, sich ändernden Bedingungen, z.B. aufgrund der Position des Fahrzeuges, in dem das Rundfunkempfangssystem eingebaut ist, auch grundsätzliche Eigenschaften der Empfangseinheit mit den zugeordneten Antennen berücksichtigt werden. Ohne Beschränkung auf dieses Beispiel ist eine solche grundsätzliche Eigenschaft die Empfangscharakteristik einer Antenne eines bestimmten Typs. Zeigt eine Antenne in der ober Hälfte des FM-Bandes besonders gute Empfangseigenschaften, während sie in der unteren Hälfte sehr schlechte zeigt, so wird die Empfangseinheit mit dieser Antenne regelmäßig nur bei FM-Empfangsfrequenzen in der oberen Hälfte des FM-Bandes zum Einsatz kommen und im unteren Bereich andere Empfangseinheiten. Entsprechende Bedingungen können zu bevorzugten Aufgaben innerhalb eines Frequenz- oder Antennen-Diversity-Modus führen.
Ein Ausführungsbeispiel der Erfindung ist in der Figur 1 dargestellt und wird im folgenden näher beschrieben.
Das Rundfunkempfangssystem 1 besteht aus einer Ein-/Ausgabeeinheit 2 und vier Empfangseinheiten 3, die mit der Ein-/Ausgabeeinheit 2 über eine ringförmige Verbindungsleitung 9 verbunden sind.
Jede Empfangseinheit 3 zeigt eine Steuereinheit 4 und zwei digitale Schnittstellen 7 auf, von denen eine zur Aufnahme der digitalen Signale des Ringes ausgebildet ist, und eine zur Einspeisung der digitalen Signale von der Empfangseinheit 3 in die Verbindungsleitung 9. Weiterhin weisen die Empfangseinheiten 3 jeweils ein Tunerteil 5 und eine Signalaufbereitungseinheit 6 auf, welche auch zu einer einzigen Einheit zusammengefaßt sein können. Jeder Empfangseinheit 3 sind eine oder mehrere Antennen 8 zugeordnet.
Von den Antennen 8 wird ein Antennensignal, das gegebenenfalls aus mehreren Antennensignalen gebildet ist, dem Tunerteil 5 zugeführt, welches dieses zusammen mit der Signalaufbereitungseinheit 6 zu einem Audiosignal aufbereitet und mit einer Qualitätsbewertung versieht. Abhängig von der Qualitätsbewertung wird das empfangene und aufbereitete Signal in digitalisierter Form über die digitale Schnittstelle 7 an die Verbindungsleitung 9 zur Weiterleitung an die Ein-/Ausgabeeinheit 2 gegeben, wenn auf der Verbindungsleitung 9 von den anderen vorhergehenden Empfangseinheiten 3 ein schlechteres Signal übertragen wird. Ist das Signal von der vorhergehenden Empfangseinheit besser oder gleich gut, so wird das über die Schnittstelle 7 empfangen Signal an die andere Schnittstelle 7 zur Einspeisung in die Verbindungsleitung 9 zur Weiterleitung an die Ein-/Ausgabeeinheit 2 durchgereicht.
Die Ein-/Ausgabeeinheit 2 nimmt das digitale Signal über seine Schnittstelle 7 auf und bereitet das Audiosignal gesteuert durch die Steuereinheit 10 durch den Verstärker 12 mit zugehöriger Signalaufbereitung in Form von Balance-, Fader-, Höhen-, Baß-, Pseudo-Stereo-, Equalizerregelungen auf, um es anschließend an die Lautsprecher 13, von den nur einer gezeichnet ist, weiterzuleiten.
Durch das Man-Machine-Interface 11, über welches der Benutzer des Rundfunkempfangssystems 1 seine Einstellungen wie Senderwahl, wie Lautstärkeeinstellung, wie Klangeinstellung, o.ä. vornehmen kann, werden die diesen Einstellungen entsprechenden digitalen Steuerbefehle oder digitalen Steuerdaten über die Steuereinheit 10 der Ein-/Ausgabeeinheit 2 und deren Schnittstelle 7 an die Empfangseinheiten 3 mit ihren Steuereinheiten 4 oder den Verstärker 12 geleitet. Entsprechend den digitalen Steuerdaten werden die durch diese adressierten Empfangseinheiten 3 oder der Verstärker 12 ein dementsprechendes Verhaltensmuster annehmen. Insbesondere wird durch diese Steuerdaten festgelegt welche Empfangseinheiten 3 als Antennen-Diversity-Einheiten auf einer bestimmten gemeinsamen Frequenz arbeiten sollen und welche die Funktion von Frequenz-Diversity-Empfangem annehmen sollen Im Rahmen dieser Betriebsweisen werden die empfangenen Rundfunksignale aufbereitet und mit Steuerdaten in Form von Qualitätsdaten als digitale Daten in die ringförmige Verbindungsleitung 9 gegeben. Entsprechend der Qualitätsdaten werden die digitalen Rundfunkdaten auf der Verbindungsleitung 9 in den einzelnen Empfangseinheit 3 entweder durch die dort empfangenden und aufbereiteten Rundfunkdaten ersetzt oder einfach unverändert zur Ein-/Ausgabeeinheit 2 durchgereicht. Dabei übernimmt die Steuereinheit 10 in der Ein-/Ausgabeeinheit 2 die systemübergreifende Steuerung der Empfangseinheiten 3, während die Steuerungen 4 in den Empfangseinheiten 3 die lokale oder unter Umständen die Steuerung einer Gruppe von Empfangseinheiten 3 mit entsprechender oder gleicher Aufgabe übernimmt. Auf diese Art ist eine hierarchische Organisationsstruktur mit wenigen Hierarchieebenen im beschriebenen Beispiel 2 oder 3 gegeben, was die Organisation vereinfacht und die zu übertragenden Daten über die Verbindungsleitung 9 begrenzt hält.
Regelmäßig senden die Empfangseinheiten 3 ein Meldung an die Ein-/Ausgabeeinheit 2 ab, in der sie Ihr Vorhandensein, ihre Konfiguration - eine oder mehrere angeschlossene Antennen, FM- oder AM-Tunerteil, allgemeine Empfangsqualität o.ä. - sowie ihre Position - drittes Gerät im Ring oder Einbauort Kofferraum - angeben. Anhand diese Statusdaten wird die Steuerung 10 der Ein-/Ausgabeeinheit 2 die Empfangsstrategie festlegen Stehen eine größere Zahl von Empfangseinheiten zur Verfügung wird eine gemischte Antennen- /Frequenz-Diversity-Strategie zur Anwendung kommen, bei einer geringen Anzahl z.B. von 2 oder 3 Empfangseinheiten wird regelmäßig nur eine reine Empfangsstrategie zur Anwendung kommen und beim Ausfall aller Empfangseinheiten 3 bis auf eine einzig verbleibende aktive Empfangseinheit 3 wird dieser die Notfallstrategie eines Ein-Empfanger-Autobest-Tuners zugewiesen. In diesem Fall wird über das Man-Machine-Interface 11 dem Benutzer der Defekt der verschieden Empfangseinheiten 3 bevorzugt mit der Angabe ihrer Positionen mitgeteilt, so daß der Benutzer die Reparatur oder den Austausch der defekten Empfangseinheiten 3 in die Wege leiten kann. Wie die Steuereinheit 10 auf den Defekt von Empfangseinheiten 3 reagiert so erkennt sie anhand der Statusmeldungen das Hinzufügen einer oder mehrere weiterer Empfangseinheiten 3 und paßt die Empfangsstrategie den systembedingten Gegebenheiten an Entscheidend für einen möglichst störungsarmen Empfang ist die Anordnung der Empfangseinheiten 3 mit den ihnen zugeordneten Antennen 8 in enger räumlicher Nähe zueinander, was in der Figur 1 durch direkte Verbinden dieser Elemente angedeutet ist. Das hat zur Folge, daß der Einbauort der Empfangseinheit 3 sich nach der Position der einen oder der mehreren zugeordneten Antennen 8 bestimmt. Stellen die Antennen 8 Scheibenantennen dar, so wird die zugehörige Empfangseinheit 3 möglichst nahe an der Scheibe gegebenenfalls in Rahmen der Scheibe angeordnet. Stellen die Antennen 8 gewöhnliche Stabantennen im Kotflügelbereich dar, so wird die zugehörige Empfangseinheit im Antennenfuß untergebracht, was die Länge der Antennenleitung auf ein absolutes Minimum reduziert. Wird der Antennenfuß mit der Empfangseinheit darüber hinaus noch mit einem Gehäuse entsprechend einem Faraday-Käfig versehen, welches in Figur 1 nicht dargestellt ist, so werden die Störeinstrahlungen endgültig auf ein Minimalmaß reduziert.
Die Ein-/Ausgabeeinheit 2 mit ihrem Man-Machine-Interface 11 ist im Bereich der Konsole des Kraftfahrzeuges angeordnet, wo der Benutzer die Bedienung des Rundfunkemfangssystem 1 vornehmen kann, ohne seine Aufmerksamkeit vom Verkehr zu reduzieren. Dabei kann die Ein-/Ausgabeeinheit 2 nicht nur Funktion für das Rundfunkempfangssystem 1 alleine sondern auch für andere elektrische oder elektronische Komponenten im Fahrzeug, wie Klimaanlage, Navigation, Telefon oder ähnliches übernehmen. Nicht zuletzt dadurch wird der begrenzte und begehrte Raum im Bereich der Konsole in besonders effizienter Weise für die Ein- und Ausgabe von Informationen vom und an den Benutzer benutzt und damit nicht für die Aufbereitung von Antennensignalen oder ähnliches verschwendet.

## Patentansprüche

1. Rundfunkempfangssystem (1) für ein Fahrzeug mit einer Ein-/Ausgabeeinheit (2), mit mehreren Empfangseinheiten (3), die jeweils eine Steuereinheit (4), ein Tunerteil (5) und eine Signalaufbereitungseinheit (6) mit digitaler Schnittstelle (7) aufweisen, die von der Ein-/Ausgabeeinheit (2) abgesetzt ausgebildet sind und die jeweils mindestens eine zugeordnete Antenne (8) aufweisen, wobei die Empfangseinheiten (3) untereinander und mit der Ein-/Ausgabeeinheit (2) über eine Verbindungsleitung (9) für digitale Signale verbunden sind.

2. Rundfunkempfangssystem nach Anspruch 1, **dadurch gekennzeichnet, daß** die Empfangseinheiten (3) und die zugeordneten Antennen (8) in enger räumlicher Nähe zueinander angeordnet sind.

3. Rundfunkempfangssystem nach Anspruch 2, **dadurch gekennzeichnet, daß** die Empfangseinheiten (3) und die zugeordneten Antennen (8) zu einer räumlich kompakten Einheit verbunden sind.

4. Rundfunkempfangssystem nach Anspruch 1, **dadurch gekennzeichnet, daß** die Ein-/Ausgabeeinheit (2) mit den Empfangseinheiten (3) über die Verbindungsleitungen (9) zu einem Ring verbunden sind

5. Rundfunkempfangssystem nach Anspruch 1 oder Anspruch 4, **dadurch gekennzeichnet, daß** die Verbindungsleitungen (9) für die Übertragung von optischen Signalen ausgebildet sind und die Ein-/Ausgabeeinheit (2) und die Empfangseinheiten (3) geeignet sind, über die Verbindungsleitungen (9) optische Signale zu empfangen und abzugeben.

6. Rundfunkempfangssystem nach einem der vorstehenden Ansprüche, **dadurch gekennzeichnet, daß** die Ein-/Ausgabeeinheit (2) eine Steuereinheit (10) aufweist, welche die Steuerung des Rundfunkempfangsystems mit seinem Man-Machine-Interface (11) sowie die übergeordnete Steuerung (10) der Empfangseinheiten (3) mit ihren internen Steuereinheiten (4) sicherstellt.

7. Verfahren zum Empfang von Rundfunksendungen mit einem Rundfunkempfangssystem (1) nach einem der vorstehenden Ansprüche, bei dem zwei oder mehr Empfangseinheiten (3) auf derselben Frequenz empfangen, das Empfangssignal von der zugeordneten Antenne (8) durch das Tunerteil (5) aufbereitet, es in der in der Signalaufbereitungseinheit (6) nach der Qualität bewertet wird und bei dem eine erste Empfangseinheit (3) das von ihr empfangene, aufbereitete und digitale Signal mit einer Information über die Qualität des Empfangssignals versehen wird und über die Verbindungsleitung (9) an die nächste Empfangseinheit (3) weitergeleitet wird, welche abhängig von der Qualität ihres eigenen empfangenen Signals ihr empfangenes, aufbereitetes und digitales Signal mit der Qualitätsinformation an die Stelle des schlechteren digitalen Signals der vorhergehenden Empfangseinheit (3) setzt oder ihr eigenes Signal nicht weitergibt und die Ein-/Ausgabeeinheit (2) das von ihr durch die Verbindungsleitung (9) erhaltene Signal an den Benutzer des Rundfunkempfangssystem (1) ausgibt.

8. Verfahren zum Empfang von Rundfunksendungen mit einem Rundfunkempfangssystem (1) nach einem der vorstehenden Ansprüche bei dem zwei oder mehr Empfangseinheiten (3) auf unterschiedlichen Frequenzen eines einzigen Senders empfangen, das Empfangssignal von der zugeordneten Antenne (8) durch das Tunerteil (5) aufbereitet, es in der in der Signalaufbereitungseinheit (6) nach der Qualität bewertet wird und bei dem eine erste Empfangseinheit (3) das von ihr empfangene, aufbereitete und digitale Signal mit einer Information über die Qualität des Empfangssignals versehen wird und über die Verbindungsleitung (9) an die nächste Empfangseinheit (3) weitergeleitet wird, welche abhängig von der Qualität ihres eigenen empfangenen Signals ihr empfangenes, aufbereitetes und digitales Signal mit Qualitätsinformation an die Stelle des schlechteren digitalen Signals der vorhergehenden Empfangseinheit (3) setzt oder ihr eigenes Signal nicht weitergibt und die Ein-/Ausgabeeinheit (2) das von ihr durch die Verbindungsleitung (9) erhaltene Signal an den Benutzer des Rundfunkempfangssystem (1) ausgibt.

9. Verfahren zum Empfang von Rundfunksendungen nach Anspruch 7 und/oder 8, **dadurch gekennzeichnet, daß** die Steuereinheiten (4) der Empfangseinheiten (3) steueren wie viele und/oder welche Empfangseinheiten (3) auf einer einzigen oder auf verschiedenen Frequenzen eines einzigen Senders empfangen, die Empfangssignale aufbereiten und sie an die anderen Empfangseinheiten (3) und/oder an die Ein-/Ausgabeeinheit (2) weiterleiten, wobei die Steuerung der Empfangseinheiten (3) durch die Ein-/Ausgabeeinheit (2) sich im wesentlichen auf die Senderwahl beschränkt.

10. Verfahren zum Empfang von Rundfunksendungen nach Anspruch 7 und/oder 8, **dadurch gekennzeichnet, daß** die Ein-/Ausgabeeinheit (2) steuert wie viele und/oder welche Empfangseinheiten (3) auf einer einzigen oder auf verschiedenen Frequenzen eines einzigen Senders empfangen, die Empfangssignale aufbereiten und sie an die anderen Empfangseinheiten (3) und/oder an die Ein-/Ausgabeeinheit (2) weiterleiten.

11. Verfahren zum Empfang von Rundfunksendungen nach einem der vorstehenden Ansprüche 7 bis 10 insbesondere nach Anspruch 10, **dadurch gekennzeichnet, daß** die Empfangseinheiten (3) der Ein-/Ausgabeeinheit (2) über die Verbindungsleitung (9) ihre Position und ihre Anzahl mitteilen und abhängig von dieser Information die Ein-/Ausgabeeinheit (2) die Aufgaben der Empfangseinheiten (3) festlegt.

12. Verfahren zum Empfang von Rundfunksendungen nach Anspruch 11, **dadurch gekennzeichnet, daß** als weiteres Bewertungskriterium für die Verteilung der Aufgaben der einzelnen Empfangseinheiten (3) die allgemeine Empfangsqualität der jeweiligen Empfangseinheit (3) berücksichtigt wird.

13. Verfahren zum Empfang von Rundfunksendungen nach einem der vorstehenden Ansprüche 7 bis 12, **dadurch gekennzeichnet, daß** regelmäßig der Status der Empfangseinheiten (3) festgestellt wird und daß beim Ausfall aller Empfangseinheiten (3) bis auf eine, diese von der Ein-/Ausgabereinheit (2) die Funktion eines Ein-Tuner-Autobestrundfunkempfängers zugewiesen bekommt.

14. Verfahren zum Empfang von Rundfunksendungen nach Anspruch 7 und/oder 8, **dadurch gekennzeichnet, daß** mehrere Empfangseinheiten (3) zu einer oder mehreren Gruppen zusammenfaßt sind und eine Empfangseinheit (3) jeder Gruppe die Funktion der Steuerung der Aufgabenverteilung der Empfangseinheiten (3) innerhalb der Gruppe zugeordnet ist und diese Funktion für das gesamte System (1) übergreifend von der Ein-/Ausgabeeinheit (2) gesteuert wird

## Claims

1. Broadcast receiving system (1) for a motor vehicle with an input/output unit (2), with a plurality of receiving units (3) which each have a control unit (4), a tuner part (5) and a signal processing unit (6) with a digital interface (7), are constructed recessed from the input/output unit (2) and in each case have an associated antenna (8), wherein the receiving units (3) are connected to one another and with the input/output unit (2) by way of a connecting line (9) for digital signals.

2. Broadcast receiving system as claimed in Claim 1, **characterised in that** the receiving units (3) and the associated antennas (8) are disposed in close spatial proximity to one another.

3. Broadcast receiving system as claimed in Claim 2, **characterised in that** the receiving units (3) and the associated antennas (8) are connected to form a spatially compact unit.

4. Broadcast receiving system as claimed in Claim 1, **characterised in that** the input/output unit (2) is connected to the receiving units (3) by way of the connecting lines (9) to form a ring.

5. Broadcast receiving system as claimed in Claim 1 or Claim 4, **characterised in that** the connecting lines (9) are constructed for the transmission of optical signals and the input/output unit (2) and the receiving units (3) are suitable for receiving and emitting optical signals by way of the connecting lines (9).

6. Broadcast receiving system as claimed in any one of the preceding claims, **characterised in that** an input/output unit (2) has a control unit (10) which ensures the control of the broadcast receiving system with its man/machine interface (11) as well as the superior control (10) of the receiving units (3) with their internal control units (4).

7. Method of receiving broadcasts with a broadcast receiving system (1) as claimed in any one of the preceding claims, in which two or more receiving units (3) are received at the same frequency, the received signal from the associated antenna (8) is processed by the tuner part (5), it is evaluated in terms of quality in the signal processing unit (6), the digital signal received and processed by it is provided with an item of information concerning the quality o the received signal and is passed on by way of the connecting line (9) to the next receiving unit (3) which as a function of the quality of its own received signal substitutes its received processed and digital signal with the quality information for the poorer digital signal of the preceding receiving unit (3) or does not pass on its own signal and the input/output unit (2) outputs the signal obtained by it through the connecting line (9) to the user of the broadcast receiving system (1).

8. Method of receiving broadcasts with a broadcast receiving system (1) as claimed in any one of the preceding claims, in which two or more receiving units (3) receive at different frequencies from one single transmitter, the received signal from the associated antenna (8) is processed by the tuner part (5), it is evaluated in terms of quality in the signal processing unit (6), the digital signal received and processed by it is provided with an item of information concerning the quality o the received signal and is passed on by way of the connecting line (9) to the next receiving unit (3) which as a function of the quality of its own received signal substitutes its received processed and digital signal with the quality information for the poorer digital signal of the preceding receiving unit (3) or does not pass on its own signal and the input/output unit (2) outputs the signal obtained by it through the connecting line (9) to the user of the broadcast receiving system (1).

9. Method of receiving broadcasts as claimed in Claim 7 and/or 8, **characterised in that** the control units (4) of the receiving units (3) control as many and/or those receiving units (3) which receive at one single frequency or at different frequencies from one single transmitter, process the received signals and pass them on to the other receiving units (3) and/or to the input/output unit (2), wherein the control of the receiving units (3) is substantially restricted by the input/output unit to the choice of transmitter.

10. Method of receiving broadcasts as claimed in Claim 7 and/or 8, **characterised in that** the input/output unit (2) controls as many and/or those receiving units (3) which receive at one single frequency or at different frequencies from one single transmitter, process the received signals and pass them on to the other receiving units (3) and/or to the input/output unit (2).

11. Method of receiving broadcasts as claimed in any one of the preceding Claims 7 to 10, in particularly as claimed in Claim 10, **characterised in that** the receiving units (3) of the input/output unit (2) communicate their position and their number via the connecting line (9) and as a function of this information the input/output unit (2) fixes the functions of the receiving units (3).

12. Method of receiving broadcasts as claimed in Claim 11, **characterised in that** the general reception quality of the respective receiving unit (3) is taken into account as a further evaluation criterion for the distribution of the functions of the individual receiving units (3).

13. Method of receiving broadcasts as claimed in any one of Claims 7 to 12, **characterised in that** the status of the receiving units (3) is established regularly and that when all receiving units (3) except one fail this one receives the task of a single-tuner best car radio receiver allocated to it by the input/output unit (2).

14. Method of receiving broadcasts as claimed in Claim 7 and/or 8, **characterised in that** a plurality of receiving units (3) are combined into one or several groups and one receiving unit (3) of each group is assigned the function of controlling the distribution of tasks of the receiving units (3) within the group and this function is controlled for the entire system (1) generally by the input/output unit (2).

## Revendications

1. Système de réception radiophonique (1) pour un véhicule, avec une unité d'entrée / de sortie (2) avec plusieurs unités de réception (3) qui comportent respectivement une unité de commande (4), une unité tuner (5), une unité de régénération des signaux (6) avec interface numérique, (7) qui sont conçues de façon décalée par rapport à l'unité d'entrée / de sortie (2) et qui comportent au moins une antenne associée (8), les unités de réception (3) étant reliées entre elles et avec l'unité d'entrée / de sortie (2) par l'intermédiaire d'une ligne de raccordement (9) pour signaux numériques.

2. Système de réception radiophonique selon la revendication 1, **caractérisé en ce que** les unités de réception (3) et les antennes associées (8) sont disposées à proximité mutuelle étroite dans l'espace.

3. Système de réception radiophonique selon la revendication 2, **caractérisé en ce que** les unités de réception (3) et les antennes associées (8) sont reliées en une unité compacte dans l'espace.

4. Système de réception radiophonique selon la revendication 1, **caractérisé en ce que** l'unité d'entrée / de sortie (2) est reliée en un anneau avec les unités de réception (3), par l'intermédiaire des lignes de raccordement (9).

5. Système de réception radiophonique selon la revendication 1 ou 4, **caractérisé en ce que** les lignes de raccordement (9) sont conçues pour la transmission de signaux optiques et l'unité d'entrée/ sortie (2) et les unités de réception (3) sont adaptées pour réceptionner et délivrer des signaux optiques par l'intermédiaire des lignes de raccordement (9).

6. Système de réception radiophonique selon l'une quelconque des revendications précédentes, **caractérisé en ce que** l'unité d'entrée/ sortie (2) comporte une unité de commande (10) qui assure la commande du système de réception radiophonique avec son interface homme/machine (11) ainsi que la commande directrice (10) des unités de réception (3) avec ses unités de commande internes (4).

7. Procédé de réception d'émissions radio avec un système de réception radiophonique (1) selon l'une quelconque des revendications précédentes, dans lequel deux ou plusieurs unités de réception (3) réceptionnent sur la même fréquence, le signal de réception de l'antenne associée (8) est régénéré par l'élément tuner (5), sa qualité est évaluée dans l'unité de régénération des signaux (6) et dans lequel une première unité de réception (3) munit le signal numérique réceptionné et régénéré par ses soins d'une information au sujet de la qualité du signal de réception et le retransmet par l'intermédiaire de la ligne de raccordement (9) à la prochaine unité de réception (3), qui, en fonction de la qualité de son propre signal réceptionné, remplace le signal numérique plus mauvais de l'unité de réception précédente (3) par le signal numérique régénéré et réceptionné avec l'information qualité ou ne retransmet pas son propre signal, et l'unité d'entrée/ de sortie (2) délivre le signal réceptionné par ses soins par l'intermédiaire de la ligne de raccordement (9) à l'utilisateur du système de réception radiophonique (1).

8. Procédé de réception d'émissions radio avec un système de réception radiophonique (1) selon l'une quelconque des revendications précédentes, dans lequel deux ou plusieurs unités de réception (3) réceptionnent sur différentes fréquences d'un seul récepteur, le signal de réception de l'antenne associée (8) est régénéré par l'élément tuner (5), sa qualité est évaluée dans l'unité de régénération des signaux (6) et dans lequel une première unité de réception (3) munit le signal numérique réceptionné et régénéré par ses soins d'une information au sujet de la qualité du signal de réception et le retransmet par l'intermédiaire de la ligne de raccordement (9) à la prochaine unité de réception (3), qui, en fonction de la qualité de son propre signal réceptionné, remplace le signal numérique plus mauvais de l'unité de réception précédente (3) par le signal numérique régénéré et réceptionné avec l'information de qualité ou ne retransmet pas son propre signal, et l'unité d'entrée/de sortie (2) délivre le signal réceptionné par ses soins par l'intermédiaire de la ligne de raccordement (9) à l'utilisateur du système de réception radiophonique (1).

9. Procédé de réception d'émissions radio selon la revendication 7 et/ou 8, **caractérisé en ce que** les unités de commande (4) des unités de réception (3) commandent le nombre et/ou la nature des unités de réception (3) qui réceptionnent sur une seule ou sur différentes fréquences d'un seul émetteur, régénèrent les signaux de réception et les retransmettent aux autres unités de réception (3) et/ou à l'unité d'entrée/ sortie (2), la commande des unité de réception (3) par l'unité d'entrée/ sortie (2) se restreignant sensiblement à la sélection des émetteurs.

10. Procédé de réception d'émissions radio selon la revendication 7 et/ ou 8, **caractérisé en ce que** l'unité d'entrée/ sortie (2) commande le nombre et/ou la nature des unité de réception (3) qui réceptionnent sur une seule ou sur différentes fréquences d'un seul émetteur, régénèrent les signaux de réception et les retransmettent aux autres unités de réception (3) et/ ou à l'unité d'entrée/sortie (2).

11. Procédé de réception d'émissions radio selon l'un quelconque des revendications précédentes 7 à 10, notamment selon la revendication 10, **caractérisé en ce que** les unités de réception (3) indiquent à l'unité d'entrée/sortie (2) par l'intermédiaire de la ligne de raccordement (9) leur position et leur nombre et en fonction de cette information, l'unité d'entrée/ sortie (2) détermine les tâches des unités de réception (3).

12. Procédé de réception d'émissions radio selon la revendication 11, **caractérisé en ce que** la qualité de réception générale de l'unité de réception respective (3) est prise en considération en tant que critère d'évaluation supplémentaire pour la distribution des tâches des unités de réception individuelles (3).

13. Procédé de réception d'émissions radio selon l'une quelconque des revendications précédentes 7 à 12, **caractérisé en ce que** le statut des unités de réception (3) est régulièrement déterminé et **en ce que** lors d'une panne de toutes les unités de réception (3) sauf une, l'unité d'entrée/ sortie (2) affecte à cette dernière la fonction d'un récepteur automatique à un tuner pour la meilleure réception radiophonique.

14. Procédé de réception d'émissions radio selon la revendication 7 et/ou 8, **caractérisé en ce que** plusieurs unités de réception (3) sont regroupées en un ou en plusieurs groupes et **en ce que** la fonction de commande de distribution des tâches des unités de réception (3) au sein du groupe est affectée à une unité de réception (3) de chaque groupe et **en ce que** cette fonction est commandée par l'unité d'entrée/sortie (2) pour l'ensemble du système (1).
